# EUROPÄISCHE PATENTANMELDUNG

(11) **EP 4 696 752 A1**
(43) Veröffentlichungstag der Anmeldung: **18.02.2026**
(21) Anmeldenummer: 25193690.2
(22) Anmeldetag: 04.08.2025
(51) Int. Cl.: C09J 5/00, C09J 7/21

(54) **VERFAHREN ZUM UMMANTELN VON LANGGESTRECKTEM GUT WIE INSBESONDERE KABELSÄTZEN**

(30) Priorität: 14.08.2024 DE 102024207751; 13.11.2024 DE 102024133248
(71) Anmelder: TESA SE, 22848 Norderstedt (DE)
(72) Erfinder: FINK, Mathias Patrick, 22848 Norderstedt (DE); PENNEKAMP, Jan-Gerd, 22848 Norderstedt (DE)
(74) Vertreter: tesa SE

(57) **Zusammenfassung**

Die Erfindung betrifft ein Verfahren zum Ummanteln von langgestrecktem Gut, wie insbesondere Kabelsätzen, wobei bei dem Verfahren ein Klebeband bereitgestellt wird, umfassend einen textilen Träger und eine auf mindestens einer Seite des Trägers aufgebrachte Haftklebemasse, und das langgestreckte Gut mit dem Klebeband ummantelt wird, wobei auf das Klebeband, bevor es auf das langgestreckte Gut aufgebracht wird, eine Zugspannung in Längsrichtung aufgebracht wird, durch die das Klebeband verlängert wird, so dass es im verlängerten Zustand in einer Schraubenlinie um das langgestreckte Gute geführt wird und auf diesem im verlängerten Zustand fixiert wird.

## Beschreibung

Die Erfindung betrifft ein Verfahren zum Ummanteln von langgestrecktem Gut, wie insbesondere Kabelsätzen, wobei bei dem Verfahren ein Klebeband bereitgestellt wird, umfassend einen textilen Träger und eine auf mindestens einer Seite des Trägers aufgebrachte Haftklebemasse, und das langgestreckte Gut mit dem Klebeband ummantelt wird.

Derartige Verfahren und die zugehörigen Klebebänder, die beispielsweise als Klebebandrolle vorliegen, sind aus dem Stand der Technik seit Langem bekannt. Klebebänder der beschriebenen Art werden beispielsweise verwendet, um ein langgestrecktes Gut zu ummanteln. Das langgestreckte Gut kann dabei ein einziger Gegenstand sein oder aus mehreren Gegenständen zusammengesetzt sein. So ist beispielsweise bei der Automobilherstellung bekannt, Kabelsätze, also mehrere einzelne Kabel, miteinander zu bündeln, indem sie gemeinsam mit einem Klebeband umwickelt werden. Dabei kommt dem Klebeband nicht nur die Aufgabe zu, mehrere Gegenstände zu einem einzigen Gegenstand zu verbinden oder zu bündeln. Durch die Verwendung von Klebebändern, die einen textilen Träger aufweisen, können zudem Geräuschemissionen verringert oder gänzlich vermieden werden, die ansonsten auftreten können, wenn der Gegenstand beispielsweise mit Teilen der Karosserie oder anderen Teilen des Kraftfahrzeugs in Kontakt kommt. Daher können diese Art Klebebänder und die damit umwickelten Gegenstände ohne eine zusätzliche Umhüllung, beispielsweise aus einem Schaumstoff, im Kraftfahrzeug verbaut werden, wodurch die Kosten, die Herstellungsdauer und das Gewicht des Kraftfahrzeugs reduziert werden. Die vom textilen Träger hervorgerufenen Vorteile sind dabei jedoch nicht auf die Dämpfung von unerwünschten Geräuschen beschränkt. Das ummantelte langgestreckte Gut kann gegen mechanische Beanspruchung, beispielsweise gegen Abrieb, gegen chemische Beanspruchung oder gegen den Einfluss hoher Temperaturen geschützt werden. Für unterschiedliche Zwecke werden unterschiedliche textile Träger verwendet, wobei beispielsweise durch die Auswahl von Material, Faserdesign und/oder Struktur des textilen Trägers die Eigenschaften des textilen Trägers beeinflusst werden. In anderen Anwendungsfällen sollen durch die Ummantelung des langgestreckten Gutes, einzelne Elemente, beispielsweise einzelne Kabel oder Kabelstränge, miteinander verbunden werden. Dies ist auch unter dem Begriff "basic bundling" bekannt. Diese Möglichkeiten sind nicht nur bei Klebebändern aus dem Stand der Technik gegeben, sondern können auch für Klebebänder, die in erfindungsgemäßen Verfahren verwendet werden, genutzt werden.

Insbesondere im letzten Fall ist es oft ausreichend, das langgestreckte Gut nicht vollständig zu ummanteln, sondern zwischen den einzelnen Umwicklungen einen Abstand vorzusehen. In diesem Abstand zwischen zwei aufeinander folgenden Umwicklungen ist das langgestreckte Gut nicht in Kontakt mit dem Klebeband und wird von diesem nicht abgedeckt, so dass es in Kontakt mit Umwelteinflüssen kommen kann.

Des Weiteren sind aufgewickelte Klebebänder im Stand der Technik bekannt. Das Klebeband, das auch als Laminat bezeichnet werden kann, kann in festen Längen, beispielsweise als Meterware oder aber als aufgerollte Endlosware zur Verfügung gestellt werden. Es gibt scheibenförmige Klebebandrollen, die in der Fachsprache als "pan-cake" bezeichnet werden. Die Breite des Klebebandes entspricht in diesem Fall der Breite der Klebebandrolle, da das Klebeband in einer Mehrzahl von Lagen und Wicklungen vorliegt, die möglichst exakt übereinander liegen.

Alternativ kann das Klebeband wie ein Textilgarn auf einen Kern aufgespult sein, dessen Länge wesentlich größer ist als die Breite des Klebebandes. Durch das Überlagern einer Rotationsbewegung des Kernes und einer axialen Bewegung des Kernes oder des Klebeband-Führungsorganes bildet das Klebeband zunächst eine erste, radial innerste Lage helixförmiger Windungen. Zum Abschluss der ersten Lage und Sprung in die zweite Lage wird bei unveränderter Rotationsbewegung die Orientierung der Axialbewegung invertiert. Zum Abschluss der zweiten Lage und Sprung in die dritte Lage wird bei weiterhin unveränderter Rotationsbewegung die Orientierung der Axialbewegung erneut invertiert, also wieder zur ursprünglichen Orientierung übergegangen. Zwischen jedem der Orientierungsumkehrpunkte bleibt der Steigungswinkel konstant. Auf diese Weise können zahlreiche Windungslagen gebildet werden, deren Windungen sich jeweils kreuzen (kreuzgewickelte Spulen).

Zu den Begriffen der Spultechnik sei im Übrigen verwiesen auf das seit dem 01. Juli 2001 im Internet hinterlegte elektronische Lehrbuch der Firma "Double R Controls LTD, England" des Autors Neal Rothwell mit dem Titel "Technical Information on the Principles of Spooling".

Um die Klebebänder einfach und sicher handhaben zu können, ist es bekannt, sie zu einer Rolle aufzuwickeln. Dies geschieht beispielsweise auf einer Grundrolle, dem Fachmann auch unter der Bezeichnung Kern bekannt, die später Teil der Klebebandrolle sein kann, jedoch nicht sein muss. Der Kern besteht üblicherweise aus Pappe oder Kunststoff. Beim Aufwickeln des Klebebandes wird das Klebeband in mehreren Windungen auf die Grundrolle aufgewickelt. Ein Ende des Klebebandes ist daher radial innen angeordnet, das im Folgenden als zweites Ende bezeichnet wird. Das entgegengesetzte Ende des Klebebandes ist radial außen angeordnet und wird im Folgenden als erstes Ende bezeichnet. Diese Art der Bezeichnungen ist sinnvoll, da dieses erste Ende als erstes von der Rolle abgewickelt und der Verwendung des Klebebandes zugeführt werden kann. Die Längserstreckung des Klebebandes erstreckt sich vom ersten Ende zu dem zweiten Ende.

Der textile Träger bei derartigen Kabelbandagierungsbändern kann ein Vlies sein.

Aus dem Stand der Technik sind Klebebänder bekannt, die ein Vlies als Träger aufweisen, das mit einer Vielzahl von beispielsweise parallel zueinander verlaufenden Nähten verfestigt wird. Die EP 0 668 336 A1 beispielsweise beschreibt ein solches Klebeband. Der Vorteil besteht darin, dass sich aufgrund der Struktur in der Oberseite des mit Nähten versehenen Trägers, die eine Vielzahl von nebeneinanderliegenden Tälern und Erhebungen aufweist, das Klebeband auch ohne Trennschicht zwischen verschiedenen Lagen des Klebebandes aufgewickelt und wieder abgewickelt werden kann.

Aus der DE 44 42 092 A1 ist bekannt, dass dadurch auch die Haftwirkung beeinträchtigt wird, wenn das Klebeband verwendet wird, um den zu umwickelnden Gegenstand mehrlagig zu umwickeln oder vollständig zu überdecken, so dass das Klebeband zumindest teilweise auf sich selbst angeordnet wird. Um diese Haftwirkung zu erhöhen, wird vorgeschlagen, das Klebeband mit einer zusätzlichen Schicht aus einem Schaum zu versehen, die von einer Lackschicht abgedeckt wird.

Klebebänder werden für unterschiedlichste Anwendungsfälle verwendet. Aus der EP 3 037 493 A1 ist beispielsweise ein Klebeband mit einem Träger auf Basis eines Nähvlieses bekannt, bei dem spezielle Materialien für den wenigstens einen Wirkfaden verwendet werden, durch den die Nähte hervorgerufen werden. Damit können Temperaturbeständigkeiten bis 175 °C erreicht und/oder die mechanischen Eigenschaften und Widerstandsfähigkeiten erhöht werden. Es werden zudem spezielle Wirktechnologien beschrieben, beispielsweise die Technologie "Maliwatt", bei der ein Rohvlies, ausgebildet als ein vorgelegter quer getäfelter Faserflor oder ein Wirrvlies, durch ein oder zwei Fadensysteme vernäht wird, bei denen der Wirkfaden das Vlies vollständig durchdringt und so auf der Unterseite des Trägers mit der Klebstoffschicht in Kontakt kommt und auf der Oberseite Verbindungsschlaufen bildet. Aus der EP 4 092 092 A1 sind verschiedene Materialien bekannt, die für den textilen Träger, also das Vlies, verwendet werden können.

Bei vielen Anwendungen von Klebebändern wird das Klebeband als Klebebandrolle bereitgestellt, die zum Umwickeln des Gegenstandes um den Gegenstand herum bewegt wird. Der Gegenstand selbst ist dabei oft nicht völlig frei bewegbar, sondern in einem oft beengten Raum angeordnet, in dem das Klebeband und damit die Klebebandrolle bewegt werden muss. Dadurch wird die maximale Dicke der Klebebandrolle, also der Durchmesser der Klebebandrolle, begrenzt. Dies hat zur Folge, dass auch die maximale Länge des Klebebandes, das zu einer Klebebandrolle aufgewickelt wird, begrenzt ist. Selbstverständlich ist es von Vorteil, wenn diese Länge möglichst groß ist, um möglichst selten die Klebebandrolle wechseln zu müssen. Dies gilt insbesondere für automatisierte Applikationsprozesse, bei denen das Gut maschinell mit dem Klebeband ummantelt wird.

Es gibt im Wesentlichen zwei Varianten, ein Klebeband zum Ummanteln von langgestrecktem Gut wie insbesondere Kabelsätzen einzusetzen.

In der ersten Variante wird das Klebeband in einer schraubenförmigen Bewegung um das langgestreckte Gut geführt. Es ergibt sich die Form einer Helix (auch Schraube, Schraubenlinie, zylindrische Spirale oder Wendel genannt; Helix ist eine Kurve, die sich mit konstanter Steigung um den Mantel eines Zylinders windet).

In der zweiten Variante wird das langgestreckte Gut in axialer Richtung von dem Klebeband umhüllt. Die Umwicklung eines Kabelbaums mit dem beschriebenen Klebeband erfolgt dabei nicht schraubenlinienförmig, sondern derart, dass beim Umwickeln eine Längsachse des Bandes im Wesentlichen parallel zur Verlaufsrichtung des Kabelbaums ausgerichtet ist. Im Querschnitt gesehen liegt das Klebeband dabei in Form einer archimedischen Spirale um den Kabelbaum. Diese Art der Wicklung wird auch "Einschlagen des Kabelbaums" genannt.

Insbesondere für den Fall, dass das Klebeband den Gegenstand nicht vollständig umgeben muss, also nicht überlappend den Gegenstand umwickelt, ist es zudem von Vorteil, wenn die Breite des Klebebandes möglichst gering ist, beispielsweise zwischen 1 mm und 7 mm, bevorzugt 2 mm bis 5 mm. Nachteilig ist jedoch, dass derartig schmale Klebebandrollen nicht oder nicht so leicht handhabbar sind und sehr selten verwendet werden.

Der Erfindung liegt die Aufgabe zugrunde, ein Verfahren zum Umwickeln eines Gegenstandes so weiterzuentwickeln, dass das Klebeband möglichst effizient eingesetzt werden kann.

Gelöst wird diese Aufgabe durch ein Verfahren, wie es im Hauptanspruch niedergelegt ist. Gegenstand der Unteransprüche sind dabei vorteilhafte Weiterbildungen des Verfahrens.

Demgemäß betrifft die Erfindung ein Verfahren gemäß dem Oberbegriff des Anspruchs 1, das sich dadurch auszeichnet, dass ein Klebeband bereitgestellt wird und das langgestreckte Gut mit dem Klebeband ummantelt wird, wobei auf das Klebeband, bevor es auf das langgestreckte Gut aufgebracht wird, eine Zugspannung in Längsrichtung aufgebracht wird, durch die das Klebeband verlängert wird, so dass es im verlängerten Zustand in einer Schraubenlinie um das langgestreckte Gut geführt wird und auf diesem im verlängerten Zustand fixiert wird. Auf das Klebeband wird eine Zugspannung in Längsrichtung derart aufgebracht, dass das Klebeband durch die Dehnung insbesondere irreversibel verlängert wird, so dass es eine größere Länge aufweist als zu dem Zeitpunkt, zu dem es bereitgestellt wurde.

Die durch die Zugspannung hervorgerufene Verlängerung ist insbesondere nicht vollständig elastisch, so dass sich das Klebeband sich nach dem Wegfall der Spannung, also wenn das Klebeband von dem Gut entfernt würde, nicht wieder auf die ursprüngliche Länge zusammenzieht. Die Verlängerung kann einen elastischen Anteil aufweisen, ist jedoch vorzugsweise nicht vollständig elastisch. Sie kann also nicht durch den Wegfall der Spannung vollständig rückgängig gemacht werden.

Wird das Verfahren durchgeführt, wird vorzugsweise das Klebeband von einer Klebebandrolle oder einer Klebebandspule abgewickelt, so dass beim Abwickelvorgang die Zugspannung auf Klebeband ausgeübt wird. Bei einem als Klebebandrolle oder Klebebandspule bereitgestellten Klebeband befindet sich der auf der Klebebandrolle oder Klebebandspule aufgewickelte Teil des Klebebandes definitionsgemäß im unverlängerten Zustand und weist somit die ursprüngliche Gesamtlänge auf. Dem Fachmann ist bekannt, dass zum Aufwickeln des Klebebandes auf eine Rolle oder eine Spule eine geringe Wickelspannung ausgeübt werden muss. Diese ist dabei aber so gering, dass das Klebeband nicht oder nur in unerheblichem Maße gedehnt wird. Die Dehnung ist dabei in die entgegengesetzte Richtung wie die Dehnung, die sich während des Abwickelvorganges einstellt, sie ist somit im Sinne der Erfindung "negativ". Das Klebeband ist maximal 5 % und üblicherweise reversibel "negativ" gedehnt (die Definition der Längendehnung erfolgt später.

Vorzugsweise wird beim Wickeln die gesamte bereit gestellte Klebebandrolle oder -spule zum Ummanteln eines oder mehrerer langgestreckter Güter verwendet. Die Länge des auf der Rolle oder Spule befindlichen Klebebandes ist, wie bereits dargelegt, dadurch begrenzt, dass die Klebebandrolle oder Klebebandspule bestimmte maximale Abmessungen nicht überschreiten darf. Wird nun ein Gut mit dem Klebeband ummantelt, wird ein Teil des Klebebandes abgewickelt und bildet einen freien Abschnitt des Klebebandes. Dieser freie Abschnitt beginnt mit dem vorderen ersten Ende des Klebebandes, das sich radial außen an der Klebebandrolle befindet. Ist das Klebeband nicht in Form einer Rolle oder Spule bereitgestellt worden, beginnt der freie Abschnitt ebenfalls mit dem vorderen ersten Ende, sofern dieses noch nicht an dem Gut angeordnet ist. Ist das Gut bereits teilweise umwickelt, befindet sich folglich ein Teil des Klebebandes bereits auf dem langgestreckten Gut und haftet an diesem aufgrund der Klebstoffschicht, die Teil des Klebebandes ist. Zwischen dem Teil des Klebebandes, der auf dem Gut haftet und dem Teil des Klebebandes, der sich noch in Form der Klebebandrolle befindet, ist der freie Abschnitt des Klebebandes. Auch ein nicht als Klebebandrolle oder Klebebandspule bereitgestelltes Klebeband wird in einer Halteeinrichtung gehalten, die auch die Hand eines Benutzers sein kann. An dieser Stelle endet der freie Abschnitt.

Auf diesen freien Abschnitt wird eine Zugspannung in Längsrichtung aufgebracht. Dies bedeutet, dass eine Zugkraft in x-Richtung auf das Klebeband aufgebracht wird. Das Klebeband ist dabei so ausgebildet, dass es durch diese Spannung verlängert wird. Wichtig ist zudem, dass die Spannung in Richtung der Längserstreckung des freien Abschnitts des Klebebandes wirkt. Das bedeutet nicht zwangsläufig, dass die Spannung und/oder die Zugkräfte, die sie hervorrufen, keine Richtungskomponente aufweisen, die nicht in Richtung dieser Längserstreckung verläuft, auch wenn diese Ausgestaltung von Vorteil ist.

In einer bevorzugten Ausgestaltung wird der freie Abschnitt nach dem Verlängern im gedehnten, sprich verlängerten Zustand auf das langgestreckte Gut aufgebracht und haftet dort. Auf diese Weise wird im Laufe des Verfahrens gemäß einer bevorzugten Ausführungsform der Erfindung das gesamte Klebeband verlängert, so dass sich nach dem Abschluss des Verfahrens oder, wenn die Klebebandrolle oder Klebebandspule gewechselt werden muss, da sich kein Klebeband mehr in aufgewickelter Form befindet, die ursprüngliche Gesamtlänge des Klebebandes auf eine verlängerte Gesamtlänge vergrößert hat.

In einer bevorzugten Ausgestaltung ist die Klebebandrolle oder die Klebebandspule auf einem Träger einer Vorrichtung angeordnet. Dazu wird im einfachsten Fall der Kern der Klebebandrolle oder Klebebandspule auf den (Kern-)Träger aufgesteckt, so dass der Kern und das darauf aufgewickelte Klebeband mit dem Träger bewegt werden können. Der Träger bewegt sich relativ zu dem langgestreckten Gut, das von dem Klebeband ummantelt werden soll. Wichtig ist dabei lediglich eine Relativbewegung. Ob der Träger beispielsweise um das Gut herum bewegt wird oder das Gut gedreht wird, ist dabei unerheblich. Wichtig ist in dieser Ausgestaltung lediglich, dass zu einer Relativbewegung zwischen dem Träger und dem Gegenstand kommt, wobei das Klebeband durch diese Bewegung von der Klebebandrolle abgewickelt wird. Durch die Haftung des Klebebandes auf der darunter liegenden Lage des Klebebandes muss durch Ziehen am freien Klebebandende diese gewisse Haftkraft überwunden werden. Die Höhe der erforderlichen Abwickelspannung richtet sich daher nach der Höhe dieser Kraft.

Vorzugsweise wird das Klebeband in dem freien Abschnitt um wenigstens 20 %, bevorzugt um wenigstens 100 %, besonders bevorzugt um wenigstens 200 % gedehnt. Die Längendehnung ist definiert als der Quotient aus der Länge des auf der Klebebandrolle oder der Klebebandspule befindlichen (ungedehnten) Klebebandes zu der Länge des auf dem langgestreckten Gut verspendeten (gedehnten) Klebebandes. Mit anderen Worten ist dies der Quotient aus der Länge eines Abschnittes des Klebebandes, die er im ungedehnten Zustand aufweist, und der Länge des gleichen Abschnittes, die er im gedehnten Zustand aufweist. Der Abschnitt kann auch das gesamte Klebeband sein. Vorteilhafterweise wird die Breite des Klebebandes, die sich senkrecht zur Längsrichtung erstreckt, beim Verlängern des Klebebandes um wenigstens 25 %, bevorzugt um wenigstens 50 %, besonders bevorzugt um wenigstens 70 % reduziert. Mit anderen Worten wird die Breite auf höchstens 75 %, bevorzugt auf höchstens 50 % (also Hälfte der ursprünglichen Breite), besonders bevorzugt auf höchstens 30 % verringert. Dieser Anteil der Verringerung der Breite, auch als Einschnürung bezeichnet, ist definiert als der Quotient aus der Breite des auf der Klebebandrolle oder Klebebandspule befindlichen (ungedehnten) Klebebandes zu der Breite des auf dem langgestreckten Gut verspendeten (gedehnten) Klebebandes.

Dies ist insbesondere für Anwendungen von Vorteil, bei denen das langgestreckte Gut nicht vollständig von Klebeband umgeben sein soll. Durch die Reduzierung der Breite kann das Klebeband effizient und damit kostengünstig eingesetzt werden, und es können Breiten realisiert werden, die so gering sind, dass sie mit herkömmlichen Klebebändern aus dem Stand der Technik nicht oder nur schwer realisierbar sind.

Für ein derartiges Verfahren wird das Klebeband beispielsweise in Form einer Klebebandrolle bereitgestellt. Das Klebeband weist einen textilen Träger mit einer Oberseite und einer Unterseite auf und eine auf der Unterseite des Trägers aufgebrachte Klebstoffschicht, wobei der textile Träger wenigstens einen Wirkfaden aufweist, der derart angeordnet ist, dass er auf der Unterseite des Trägers mit der Klebstoffschicht in Kontakt kommt und an der Oberseite eine Mehrzahl von zueinander benachbarten Schlaufen bildet.

Eine Schlaufe im Sinne der vorliegenden Erfindung ist ein Abschnitt des Wirkfadens, der an einer Austrittsstelle aus der Oberseite des textilen Trägers heraustritt und an einer Eintrittsstelle wieder in die Oberseite des textilen Trägers eintritt. Die Länge des Wirkfadens zwischen der Austrittsstelle und der Eintrittsstelle ist größer als der Abstand zwischen den beiden Stellen entlang der Oberseite des textilen Trägers.

Eine Mehrzahl dieser Schlaufen erstreckt sich durch eine in Richtung auf das zweite Ende benachbarte Schlaufe. Diese Schlaufen werden im Folgenden Verbindungsschlaufen genannt, weil sie eine Schlaufe mit wenigstens einer benachbarten Schlaufe verbinden. Wichtig ist, dass die Verbindungsschlaufe sich durch eine in Richtung auf das hintere zweite Ende benachbarte Verbindungsschlaufe verläuft und dass die Verbindungsschlaufen derart angerordnet sind, dass die Schlaufenöffnung jeder einzelnen Verbindungsschlaufe in Richtung zweites Ende und die eigentliche Schlaufe (die Schlinge) jeder einzelnen Verbindungschlaufe in Richtung erstes Ende weist. Diese Schlaufe kann selbst eine Verbindungsschlaufe sein, wenn sie sich wiederum durch ihre in Richtung auf das zweite Ende benachbarte Schlaufe erstreckt.

Jede Verbindungsschlaufe verläuft folglich durch wenigstens eine, vorzugsweise durch genau eine benachbarte Schlaufe, die ihrerseits eine Verbindungsschlaufe sein kann, aber nicht muss. Diese Ausgestaltung hat zur Folge, dass die Verbindungsschlaufe aus ihrer benachbarten Schlaufe, die im Folgenden als Nachbarschlaufe bezeichnet wird, herausgezogen werden kann, wenn eine ausreichende Kraft auf ein Ende des die Schlaufe bildenden Wirkfaden ausgeübt wird. Dadurch wird die Schlaufe zudem aufgelöst, weil die Länge des Wirkfadens zwischen der Austrittsstelle und der Eintrittsstelle an der Oberseite des textilen Trägers reduziert wird. Dies ist nur dann möglich, wenn sich keine Schlaufe durch die auf diese Weise aufzulösende Schlaufe erstreckt. Die Verbindungsschlaufen bilden eine Schlaufenkette, wobei die erste Verbindungsschlaufe dieser Schlaufenkette, die auch Anfangsschlaufe genannt werden kann, die Verbindungsschlaufe ist, die am nächsten am ersten Ende des Klebebandes angeordnet ist. Nur diese Anfangsschlaufe erstreckt sich folglich durch eine Verbindungsschlaufe, ohne dass sich eine andere Verbindungsschlaufe durch sie selbst erstreckt. Diese Anfangsschlaufe ist folglich aus ihrer benachbarten Verbindungsschlaufe herausziehbar. Die Schlaufenkette erstreckt sich in Richtung der Längserstreckung des Klebebandes, wobei im Wesentlichen die Schlaufenöffnung jeder einzelnen Verbindungsschlaufe in Richtung zweites Ende und die Schlinge jeder einzelnen Verbindungschlaufe in Richtung erstes Ende weist. Vorzugsweise weist das Klebeband mehrere parallel zueinander verlaufende Schlaufenketten auf. Ein eine solche Schlaufenkette aufweisendes Vlies ist aus dem Stand der Technik beispielsweise als "Maliwatt" bekannt.

Falls die Schlaufenketten zick-zack-förmig angeordnet sind, gilt, dass die Schlaufenöffnung jeder einzelnen Verbindungsschlaufe näher dem zweiten Ende und die Schlaufe jeder einzelnen Verbindungschlaufe näher dem ersten Ende ist.

Wird eine solche Schlaufenkette bei den Klebebändern verwendet, wie sie im Stand der Technik bekannt und beschrieben sind, muss sichergestellt werden, dass die Anfangsschlaufe, die aus ihrer benachbarten Verbindungsschlaufe herausgezogen werden kann, am zweiten Ende des Klebebandes angeordnet ist. Jede Verbindungsschlaufe verläuft im Stand der Technik also durch eine in Richtung auf das erste Ende benachbarte Verbindungsschlaufe. Damit ist sichergestellt, dass eine beispielsweise beim Abwickeln des Klebebandes aufgebrachte Zugkraft oder Spannung nicht dazu führen kann, dass die Schlaufenkette beschädigt wird.

Dies ist bei der vorliegenden Erfindung anders. Erfindungsgemäß verläuft jede Verbindungsschlaufe durch wenigstens eine, bevorzugt genau eine, in Richtung auf das zweite Ende benachbarte Verbindungsschlaufe. Damit ist sichergestellt, dass die Anfangsschlaufe, also die Schlaufe der Schlaufenkette, die am nächsten am ersten Ende des Klebebandes angeordnet ist, aus der benachbarten Verbindungsschlaufe entfernbar ist.

Dies hat vorzugsweise zufolge, dass die Anfangsschlaufe der benachbarten Verbindungsschlaufe entfernt werden kann, indem auf den Abschnitt des Klebebandes, in dem sich die Anfangsschlaufe befindet, eine Spannung in Längsrichtung des Klebebandes aufgebracht wird. Dies kann beispielsweise geschehen, indem auf das erste Ende des Klebebandes eine Zugkraft ausgeübt wird und der verbleibende Teil in einer Klebebandrolle festgehalten wird, sodass das Klebeband nicht weiter abgewickelt werden kann.

Der Teil des wenigstens einen Wirkfadens, der auf der Unterseite des Trägers mit der Klebstoffschicht in Kontakt kommt, erstreckt sich vorzugsweise in gerader Linie an der Unterseite des Trägers, wobei sich diese gerade Linie vorzugsweise in Längsrichtung des Klebebandes erstreckt. Auf der gegenüberliegenden Oberseite des Trägers bildet der wenigstens eine Wirkfaden die Verbindungsschlaufen. Sobald eine der Verbindungsschlaufen aus ihrer benachbarten Verbindungsschlaufe entfernt oder herausgezogen wurde, kann das Klebeband in diesem Bereich verlängert werden, wenn eine ausreichende Spannung in Längsrichtung des Klebebandes wirkt. Der Wirkfaden tritt aus dem textilen Träger an einer Austrittsstelle aus und an einer anderen Stelle, die als Eintrittsstelle bezeichnet wird, wieder in den textilen Träger ein. Die Länge des Wirkfadens zwischen der Austrittsstelle und der Eintrittsstelle ist größer als der Abstand zwischen den beiden Stellen, weswegen der Wirkfaden die Verbindungsschlaufe bildet. Wird nun eine ausreichend große Spannung in Längsrichtung auf diesen Bereich des Klebebandes aufgebracht, wird das Klebeband, insbesondere der textile Träger mit der an dessen Unterseite aufgebrachten Klebstoffschicht, verlängert. Dabei wird der Abstand zwischen der Austrittsstelle und der Eintrittsstelle so lange vergrößert, bis er der Länge des Wirkfadens zwischen diesen beiden Stellen entspricht. Erst dann ist eine weitere Verlängerung des Klebebandstreifens in diesem Bereich nicht mehr möglich.

Sobald die Anfangsschlaufe aus ihrer benachbarten Verbindungsschlaufe entfernt wurde, wird diese benachbarte Verbindungsschlaufe zur neuen Anfangsschlaufe und kann ihrerseits aus ihrer in Richtung auf das zweite Ende benachbarten Verbindungsschlaufe entfernt werden. Wird also auf den freien Abschnitt des Klebebandes, beispielsweise beim Abwickeln des Klebebandes von der Klebebandrolle, eine ausreichende Spannung in Längsrichtung aufrechterhalten, kann jeweils der freie Abschnitt, der bereits von der Klebebandrolle abgewickelt ist, auf diese Weise verlängert werden. Dabei vergrößert sich nicht nur die Länge des freien Abschnitts, sondern es reduziert sich auch seine Breite. In diesem Zustand wird das Klebeband dann seiner eigentlichen Verwendung, beispielsweise der Umwicklung eines langgestreckten Gutes, zugeführt.

Durch die Erfindung ist es somit möglich, die Länge des aufgewickelten Klebebandes vor der eigentlichen Verwendung zu vergrößern und gleichzeitig seine Breite zu reduzieren. Hieraus ergibt sich eine deutlich größere Länge im gedehnten Zustand als die eigentliche Lauflänge der Klebebandrolle im ungedehnten Zustand vorgibt, ohne dass dadurch der Durchmesser der Klebebandrolle beeinflusst wird.

In einer bevorzugten Ausgestaltung befinden sich zwischen der Anfangsschlaufe und dem ersten Ende des Klebebandes wenigstens eine, vorzugsweise mehrere freie Schlaufen, die von dem wenigstens einen Wirkfadens gebildet werden und nicht durch eine Verbindungsschlaufe oder eine andere freie Schlaufe verlaufen. Wie bereits dargelegt, muss eine Spannung in Längsrichtung auf den Bereich des Klebebandes ausgeübt werden, in dem sich die Anfangsschlaufe, also die erste Verbindungsschlaufe, die durch eine benachbarte Verbindungsschlaufe verläuft, befindet. Wenn diese Anfangsschlaufe direkt am ersten Ende des Klebebandes, beispielsweise innerhalb der ersten wenigen Millimeter, beispielsweise der ersten 5 mm oder der ersten 3 mm angeordnet ist, muss also in diesem Bereich die Spannung aufgebracht werden. Eine Spannung in Längsrichtung bedeutet jedoch, dass eine Zugkraft in Richtung auf das erste Ende und eine entgegengesetzte Zugkraft in Richtung auf das zweite Ende ausgeübt wird, wobei diese Richtungsangaben wie bisher eine Richtung entlang des Klebebandes, also entlang dessen Längserstreckung bezeichnen. Diese Zugkräfte müssen an dem Klebeband angreifen können.

Soll in diesem Sinne eine Spannung auf den Bereich der Anfangsschlaufe des Klebebandes ausgeübt werden, muss die Zugkraft in Richtung auf das erste Ende vor diesem Bereich, also zwischen diesem Bereich und dem ersten Ende angreifen. Daher ist es sinnvoll, wenn dieser Abschnitt des Klebebandes, der sich zwischen dem Bereich der Anfangsschlaufe und dem ersten Ende erstreckt, so groß ist, dass die Zugkraft angelegt werden kann. Die Anfangsschlaufe ist daher vorzugsweise in einem Abstand von beispielsweise mindestens 5 mm, vorzugsweise mindestens 10 mm, besonders bevorzugt mindestens 15 mm vom ersten Ende des Klebebandes angeordnet. Zwischen der Anfangsschlaufe und dem ersten Ende befinden sich dann vorzugsweise wenigstens eine, vorzugsweise mehrere freie Schlaufen, um auch hier eine Verlängerbarkeit des Klebebandes durch Auflösen der Verbindungsschlaufen wie oben beschrieben zu gewährleisten.

In einer bevorzugten Ausgestaltung bilden die Verbindungsschlaufen eine Schlaufenkette, die sich entlang der Längsrichtung des Klebebandes erstreckt besonders bevorzugt beginnt diese Schlaufenkette am zweiten Ende des Klebebandes.

Besonders vorteilhaft wird erfindungsgemäß ein Klebeband eingesetzt, das aufweist
a) ein vorderes erstes Ende,
b) ein hinteres zweites Ende,
c) eine sich von dem ersten Ende zu dem zweiten Ende erstreckende Längsrichtung,
d) einen textilen Träger mit einer Oberseite und einer Unterseite,
e) eine auf der Unterseite des Trägers aufgebrachte Haftklebemasse und
f) wenigstens einen Wirkfaden und/oder wenigstens einen Nähfaden, der derart angeordnet ist,
g) dass er auf der Unterseite des Trägers mit der Haftklebemasse in Kontakt kommt und
h) an der Oberseite eine Mehrzahl von zueinander benachbarten Verbindungsschlaufen bildet.

Nähwirkstoffe, also textile Flächengebilde, die durch Maschenbildung eingebundener Wirkfäden in ein flächiges Grundmaterial hergestellt sind, sind erfindungsgemäß als textiler Träger bevorzugt. Besonders bevorzugt sind Vlies-Nähwirkstoffe, also textile Flächengebilde mit Faservlies als Grundmaterial, die durch Maschenbildung eingebundener Wirkfäden verfestigt sind (auch als Maliwatt bezeichnet).

Bevorzugt werden als textiler Träger Vliesstoffe in Form verfestigter Stapelfaservliese oder Filament-, Meltblown- oder Spinnvliese eingesetzt, die zusätzlich mechanisch durch das Einnähen von Fäden zu verfestigen sind.

Darüber hinaus können zusätzlich zur Verfestigung auch thermische sowie chemische Verfahren wie adhäsive (mit Bindemittel) oder kohäsive (bindemittelfrei) Verfahren zum Einsatz kommen, um Faser-Faser-Bindungen zu erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Zu den erfindungsgemäß als Träger einsetzbaren Nähwirkstoffen gehören auch Fadenlagen-Nähwirkstoffe, also textile Flächengebilde mit einer oder mehreren übereinander gelegten Fadenlage(n) als Grundmaterial, die durch Maschenbildung eingebundener Wirkfäden verfestigt sind, zum Beispiel Florofol, Polfaden-Nähwirkstoffe, also textile Flächengebilde, bei denen Wirkfäden als Pol geformt in ein Grundmaterial mittels Maschenbildung eingebunden sind, zum Beispiel Malipol und Schusspol-Nähwirkstoffe, also textile Flächengebilde, bei denen als Pol geformte unvermaschte Fäden durch Wirkfäden mittels Maschenbildung an ein Grundmaterial angebunden sind, zum Beispiel Schusspol.

Besonders bevorzugt sind erfindungsgemäß Vlies-Nähwirkstoffe, also textile Flächengebilde, die durch Maschenbildung eingebundener Wirkfäden in ein flächiges Grundmaterial hergestellt sind.

Ein Vlies-Nähwirkstoff wird aus einem Vliesmaterial mit einer Vielzahl parallel zueinander verlaufender Nähte gebildet. Diese Nähte entstehen durch das Einnähen oder Nähwirken von durchgehenden textilen Fäden. Bei der Herstellung von Vlies-Nähwirkstoffen werden Stapelfaservliese oder Filament-, Meltblown- oder Spinnvliese zusätzlich mechanisch durch das Einnähen von zusätzlichen Fäden verfestigt.

Die Stapelfaservliese können orientierte Vliese beziehungswiese Vliesstoffe sein, also Vliese bei denen die Fasern sehr stark in einer Richtung orientiert sind. Bei Längsvliesen- beziehungsweise Längsvliesstoffen (längsgelegten Vliesen beziehungsweise Vliesstoffen) liegt dann der überwiegende Teil der Fasern in Längsrichtung des erzeugten Vliesstoffes (in Maschinenlaufrichtung der Herstellungslinie, im Englischen "machine direction" - MD). Bei Quervliesen- beziehungsweise Quervliesstoffen (quergelegten Vliesen beziehungsweise Vliesstoffen) liegt der überwiegende Teil der Fasern in Querrichtung (im Englischen "cross direction" - CD). Dieses MD/CD-Verhältnis wird sehr häufig zur Charakterisierung von Vliesstoffen angegeben. Bei Kreuzlage-Vliesen beziehungsweise Kreuzlage-Vliesstoffen sind durch ein Übereinanderlegen von einzelnen Faserfloren oder Vliesen mit einer Längsorientierung der Fasern zum Gesamtvlies mittels Kreuzlegern die Fasern vorzugsweise in zwei Richtungen orientiert. Bei Wirrlage-Vliesen beziehungsweise Wirrlage-Vliesstoffen (häufig auch nur als Wirrvliese beziehungsweise Wirrvliesstoffe bezeichnet) können die Spinnfasern beziehungsweise die Filamente jede beliebige Richtung einnehmen, das heißt, sie liegen relativ gleich verteilt in allen Richtungen des Vliesstoffes vor.

Spinnvliese sind textile Flächengebilde, die aus den unmittelbar extrudierten oder düsengesponnenen Chemiefäden bestehen, deren Filamente im gleichen Arbeitsgang verstreckt, geöffnet, verwirrt und mechanisch, thermisch oder chemisch zu einem Vlies verfestigt werden.

Es werden aus einer Polymerschmelze durch eine Spinndüse mittels Heißluftstrom Endlosfilamente erzeugt, die auf einem Transportband abgelegt werden. Durch die Verwirbelung der Endlosfilamente bildet sich bei der Ablage ein Vlies aus. Zur Verfestigung wird das Vlies direkt im Anschluss noch vorzugsweise durch einen beheizten Kalander thermisch verfestigt. Dabei können unterschiedliche Prägegeometrien zum Einsatz kommen, beispielsweise Diamant- oder Reiskornmuster.

Die Verfestigung nach Ablage der Endlosfilamente kann alternativ oder zusätzlich zur thermischen Behandlung auch durch Luft- oder Wasserstrahlen erfolgen. Bei Verfestigung ausschließlich durch Wasserstrahlen kann sehr viel besser ein "textiler Charakter" des Vlieses erzeugt werden als durch eine Kalandrierung, da durch die Wasserstrahlen kein starkes Anschmelzen der Fasern, sondern ein Vermaschen derselbigen, insbesondere auch eine zumindest teilweise senkrechte Ausrichtung der Filamentfasern erreicht werden kann. Das entstandene Textil wird als wasserstrahlverfestigtes Spinnvlies bezeichnet.

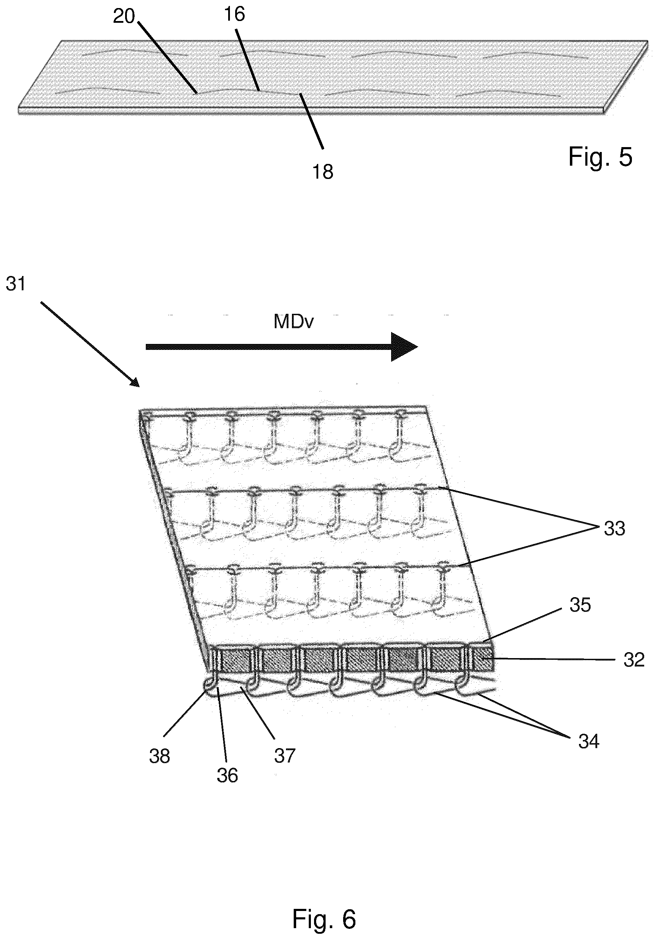

In der Figur 6 ist ein Vlies-Nähwirkstoff (31), kurz Vlies, gezeigt.

Im ersten Schritt wird ein Grundvlies (32) in Form eines Stapelfaservlieses oder eines Filament-, Meltblown- oder Spinnvlieses vorgelegt. Beim Übernähen des Grundvlieses (32) mittels Nähfäden (33) entsteht eine übernähte Vliesschicht, wobei auf der Unterseite der Vliesschicht eine Schlaufenkette (34) entsteht und auf der Oberseite der Vliesschicht eine Kette von Maschenstegen (35). Die Schlaufen (36) innerhalb der Schlaufenkette (34) sind dabei derart angeordnet, dass in Maschinenrichtung MDᵥ des Vlieses (31), also die Richtung, in der das Vlies (31) aus der Nähwirkmaschine gefördert wird, jeweils die Schlaufenöffnung (37) vor der eigentlichen Schlaufe (38), sprich der Schlinge, liegt.

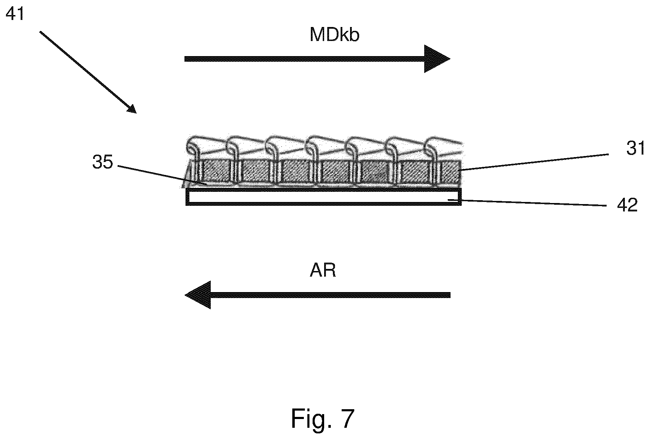

In der Figur 7 ist gezeigt, wie aus dem Vlies-Nähwirkstoff (31) ein Klebeband (41) erzeugt wird.

Nach dem Übernähen wird der entstandene Vlies-Nähwirkstoff (31) zunächst zu einer Rolle in Form einer archimedischen Spirale oder zu einer Spule aufgewickelt.

Zur Herstellung eines Klebebandes (41) wird der Vlies-Nähwirkstoff (31) in Maschinenrichtung MD_{kb} des Klebebandes (41) abgewickelt und mit einer Klebemassenschicht (42) auf der Seites des Vlies-Nähwirkstoffes (31) ausgerüstet, auf der sich die Kette von Maschenstegen (35) befindet. Das Klebeband (41) wird aufgewickelt. Das linke Ende ist somit das vordere erstes Ende, das rechte Ende ist das hintere zweite Ende.

Beim Abwickeln von der Rolle oder Spule wird das Klebeband (41) in Abzugsrichtung AR abgewickelt.

Im Stand der Technik, wie zum Beispiel auch in der EP 0 668 336 A1 offenbart ist, werden derartige Vlies-Nähwirkstoffe auf der glatteren Seite des Vliesstoffes, sprich auf der Seite, auf der die Schlaufenketten sind, mit einer Klebstoffschicht ausgerüstet.

Erfindungsgemäß wird die Seite des Vliesstoffes beschichtet, auf der sich die Ketten von Maschenstegen befinden.

Derartige verfestigte Vliesstoffe werden beispielsweise auf Nähwirkmaschinen des Typs "Malimo" der Firma Karl Mayer, ehemals Malimo, hergestellt und sind unter anderem bei der Firma Tenowo GmbH beziehbar und sind beispielsweise als "Maliwatt" bekannt.

Bei einem Maliwatt wird als Grundmaterial vorzugsweise ein Quervlies (zum Beispiel aus Wollfasern, Polymerfasern, Reißfasern aus Alttextilien) oder ein Spinnvlies verwendet. Die mechanische Verfestigung des Grundmaterials zum Maliwatt-Erzeugnis erfolgt durch Maschenbildung einer Vielzahl parallel verlaufender eingebundener Wirkfäden.

Vorzugsweise liegt die Fadenzahl zwischen 20 bis 40 Fäden/25 mm Breite des Trägers, besonders bevorzugt bei 30 Fäden/25 mm.

Weiter bevorzugt sind die Wirk- oder Nähfäden Garne, Zwirne, glatte oder texturierte Filamentfäden und/oder bestehen aus Polyester, Polypropylen, Polyethylen oder Polyamid.

Der Nähfaden kann in Fransenbindung oder in Trikotbindung aufgebracht werden.

Die Fadendicke beträgt bevorzugt 20 bis 70 dtex.

Stapelfasern sind Einzelfasern, die in ihrer Länge begrenzt sind. Das Gegenteil von Stapelfasern sind Filamente (Endlosfasern). Alle Naturfasern sind Stapelfasern, da sie nur bis zu einer bestimmten Länge vorkommen. Alle Chemiefasern können zu Stapelfasern geschnitten werden. **Im** Folgenden werden die Stapelfasern auch vereinfacht nur Fasern genannt.

Als Ausgangsmaterialien für das Trägermaterial für das Klebeband sind insbesondere (Chemie)Fasern (Stapelfaser) aus synthetischen Polymeren, auch synthetische Fasern genannt, aus Polyester, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Trägers eingesetzt werden.

Bevorzugt umfasst der Träger Fasern aus Polyester-, Polypropylen-, Polyethylen- oder Polyamid.

Die Faserdicke beträgt bevorzugt 1 bis 5 dtex (1 tex: 1 Gramm pro 1.000 Meter), vorzugsweise 1,7 bis 3,6 dtex.

Die Faserlänge beträgt bevorzugt 50 bis 100 mm, vorzugsweise 60 bis 85 mm.

Weiter vorzugsweise kann als Träger ein Vlies-Nähwirkträger eingesetzt werden, der aus einem vorverfestigten Vorvlies aus Stapelfasern hergestellt wird, wobei in das Vorvlies die parallel zueinander laufenden Fäden eingenäht werden, so dass der fertige Vlies-Nähwirkträger entsteht, wobei die Höchstzugkraft in Längsrichtung des vorverfestigten, aber noch nicht übernähten Vorvlieses kleiner als 2 N/cm, vorzugsweise kleiner 1 N/cm, besonders vorzugsweise kleiner 0,5 N/cm ist.

Gemäß einer Variante weist das Vorvlies eine Höchstzugkraft in Längsrichtung vorzugsweise von 0,2 bis 20 N/cm, besonders bevorzugt 0,5 bis 15 N/cm, weiter bevorzugt 1,0 bis 10 N/cm auf.

Weiter vorzugsweise weist das Vorvlies eine Reißdehnung von 100 % oder mehr, besonders bevorzugt 200 % oder mehr, ganz besonders bevorzugt 300 % oder mehr auf.

Die Höchstzugkraft in Längsrichtung sowie die Reißdehnung werden nach **DIN EN** 29073-3 (August 1992) bestimmt.

Das Stapelfasergelege kann vor dem Vernähen durch eine Vernadelung vorverfestigt werden, wobei die Vernadelungsdichte vorteilhaft 1 Nadel/cm² Stapelfasergelege bis 50 Nadeln/cm² Stapelfasergelege beträgt. Die Nadeldichte sollte kleiner 50 Nadeln/cm² sein, da durch jeden Vernadelungspunkt die Orientierung der Fasern isotrop wird. Bei einer zu hohen Zahl an Vernadelungspunkten wird die durch die Quertäfelung erreichte bevorzugte Orientierung in Querrichtung deutlich vermindert beziehungsweise tendenziell aufgehoben.

Darüber hinaus kann durch die Vorverfestigung des Grundvlieses die Fadenzahl der Übernähfaden pro 25 mm unter den Wert von 30 Fäden/25 mm Breite des Trägers verringert werden, ohne dass beim Abrollen des Klebebandes Fasern aus der Rückseite gerissen werden. Vorzugsweise liegt die Fadenzahl zwischen 10 bis 24 Fäden/25 mm Breite des Trägers, besonders bevorzugt bei 22 Fäden/25 mm.

Dieser Vlies-Nähwirkträger kann in einem zweistufigen Verfahren hergestellt werden, indem das Übernähen des vorverfestigten Vlieses in einem separaten Prozessschritt stattfindet.

Der Vlies-Nähwirkträger kann auch in einem einstufigen Verfahren hergestellt werden, indem das Übernähen des vorverfestigten Vlieses inline stattfindet.

Weiterhin kann durch Kalandern des Vliesträgers eine Verdichtung des Vlieses erfolgen, was sich positiv auf die Gleichmäßigkeit des Vlieses und den benötigten Klebmasseauftrag auswirken kann. Unter Kalandern versteht man das Verpressen des Vlieses zwischen zwei Walzen unter Druck und eventuell erhöhter Temperatur.

Vorteilhaft und zumindest bereichsweise kann der Träger eine ein- oder beidseitig glattgeschliffene Oberfläche aufweisen, vorzugsweise jeweils eine vollflächig glattgeschliffene Oberfläche. Die glattgeschliffene Oberfläche mag gechintzt sein, wie es beispielsweise in der EP 1 448 744 A1 im Detail erläutert wird.

Des Weiteren kann der Träger zur Verdichtung in einem Walzwerk kalandert werden. Vorzugsweise laufen die beiden Walzen gegenläufig und mit der gleichen Umfangsgeschwindigkeit, so dass der Träger gepresst und verdichtet wird.

Wenn die Umfangsgeschwindigkeit der Walzen differiert, dann wird der Träger zusätzlich glattgeschliffen.

Gemäß einer bevorzugten Ausführungsform der Erfindung liegt das Flächengewicht des textilen Trägers, vorzugsweise des Vlies-Nähwirkträgers zwischen 30 g/m² und 300 g/m², besonders bevorzugt zwischen 70 und 200 g/m².

Um aus dem Träger ein Klebeband herzustellen, kann auf alle bekannten Klebemassensysteme zurückgegriffen werden. Neben Natur- oder Synthesekautschuk basierten Klebemassen sind insbesondere Silikonklebemassen sowie Polyacrylatklebemassen, vorzugsweise eine niedermolekulare Acrylatschmelzhaftklebemasse, verwendbar.

Vorzugsweise ist die Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Haftklebstoffe können als extrem hochviskose Flüssigkeiten mit einem elastischen Anteil betrachtet werden. Haftklebstoffe haben demzufolge besondere, charakteristische viskoelastische Eigenschaften, die zu der dauerhaften Eigenklebrigkeit und Klebfähigkeit führen.

Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Besonders bevorzugt ist eine Haftklebemasse in Form einer getrockneten Polymerdispersion, wobei das Polymer aufgebaut ist aus:
(a) 95,0 bis 100,0 Gew.-% n-Butylacrylat und/oder 2-Ethylhexylacrylat
(b) 0,0 bis 5,0 Gew.-% eines ethylenisch ungesättigten Monomers mit einer Säure- oder Säureanhydridfunktion

Vorzugsweise besteht das Polymer aus 95,0 bis 99,5 Gew.-% n-Butylacrylat und/oder 2-Ethylhexylacrylat und 0,5 bis 5 Gew.-% eines ethylenisch ungesättigten Monomers mit einer Säure- oder Säureanhydridfunktion, weiter vorzugsweise aus 97,0 oder 98,0 Gew.-% bis 99,0 Gew.-% n-Butylacrylat und/oder 2-Ethylhexylacrylat und 1,0 bis 2,0 Gew.-% oder 3 Gew.-% eines ethylenisch ungesättigten Monomers mit einer Säure- oder Säureanhydridfunktion.

Neben den aufgeführten Acrylatpolymeren können der Haftklebemasse neben gegebenenfalls vorhandenen Restmonomeren zusätzlich Klebrigmacher und/oder Zuschlagstoffe wie Lichtschutz- oder Alterungsschutzmittel zugesetzt werden.

Insbesondere sind keine weiteren Polymere wie Elastomere in der Haftklebemasse enthalten, das heißt, die Polymere der Haftklebemasse bestehen nur aus den Monomeren (a) und (b) in den angegebenen Mengenverhältnissen.

Bevorzugt bildet n-Butylacrylat das Monomer (a).

Als Monomer (b) kommen vorteilhaft in Betracht zum Beispiel Acrylsäure, Methacrylsäure, Itaconsäure, Maleinsäure, Fumarsäure und/oder Maleinsäureanhydrid.

Bevorzugt ist (Meth-)acrylsäure der Formel I, 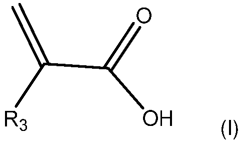 wobei R³ = H oder CH₃ ist, bevorzugt wird gegebenenfalls die Mischung aus Acrylsäure oder Methacrylsäure verwendet. Besonders bevorzugt ist Acrylsäure.

Gemäß einer besonders bevorzugten Variante weist das Polymer die folgende Zusammensetzung auf:
(a) 95,0 bis 100,0 Gew.-%, vorzugsweise 95,0 bis 99,5 Gew.-%, weiter vorzugsweise 98,0 bis 99,0 Gew.-% n-Butylacrylat und
(b) 0,0 bis 5,0 Gew.-%, vorzugsweise 0,5 bis 5,0 Gew.-%, weiter vorzugsweise 1,0 bis 2,0 Gew.-% Acrylsäure

Die Polymerdispersion wird hergestellt durch das Verfahren der Emulsionspolymerisation der genannten Komponenten. Beschreibungen dieses Verfahrens sind zum Beispiel zu finden in "Emulsion Polymerization and Emulsion Polymers" von Peter A. Lovell and Mohamed S. El-Aasser - Wiley-VCH 1997 - ISBN 0-471-96746-7 oder in EP 1 378 527 B1.

Bei der Polymerisation ist es nicht auszuschließen, dass nicht alle Monomere zu Polymeren umgesetzt werden. Dabei ist es naheliegend, dass der Restmonomergehalt möglichst klein sein soll.

Bevorzugt werden Klebemassen umfassend die Polymerdispersion mit einem Restmonomerengehalt von kleiner gleich 1 Gew.-%, insbesondere kleiner gleich 0,5 Gew.-% (bezogen auf die Masse der getrockneten Polymerdispersion) bereitgestellt.

Unter einem "Klebharz" wird entsprechend dem allgemeinem Fachmannverständnis ein oligomeres oder polymeres Harz verstanden, das die Autoadhäsion (den Tack, die Eigenklebrigkeit) der Haftklebemasse im Vergleich zu der keinen Klebharz enthaltenden, ansonsten aber identischen Haftklebemasse erhöht.

Der Einsatz von Klebrigmachern zur Steigerung der Klebkräfte von Haftklebemassen ist grundsätzlich bekannt. Dieser Effekt stellt sich auch ein, wenn der Klebemasse bis zu 15 Gewichtsteile (entspricht < 15 Gewichtsteile), beziehungsweise 5 bis 15 Gewichtsteile Klebrigmacher (bezogen auf die Masse der getrockneten Polymerdispersion) hinzugefügt werden. Bevorzugt werden 5 bis 12, weiter bevorzugt 6 bis 10 Gewichtsteile Klebrigmacher (bezogen auf die Masse der getrockneten Polymerdispersion) hinzugefügt.

Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter C₅- oder C₉-Monomere), Terpenphenolharze, Polyterpenharze auf Basis von Rohstoffen wie zum Beispiel α- oder β-Pinen, aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze.

Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009). Die Harze werden zweckmäßigerweise in Dispersionsform eingesetzt. Sie lassen sich so problemlos mit der Polymerdispersion feinverteilt mischen.

Besonders bevorzugt ist die Variante, bei der der Haftklebemasse keinerlei Klebharze zugesetzt sind. Insbesondere nicht zugesetzt werden der Haftklebemasse die folgenden Substanzen:
- Kohlenwasserstoffharze (zum Beispiel Polymere auf Basis ungesättigter C₅- oder C₉-Monomere)
- Terpenphenolharze
- Polyterpenharze auf Basis von Rohstoffen wie zum Beispiel α- oder β-Pinen
- aromatische Harze wie Cumaron-Inden-Harze oder Harze auf Basis Styrol oder α-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit

Wegen ihrer besonderen Eignung als Klebemasse für Wickelbänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind.

Unter Fogging (siehe DIN 75201 A) wird der Effekt verstanden, dass bei ungünstigen Verhältnissen niedermolekulare Verbindungen aus den Klebebändern ausgasen können und an kalten Teilen kondensieren. Dadurch kann beispielsweise die Sicht durch die Windschutzscheibe beeinträchtigt werden.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.

Der K-Wert (nach FIKENTSCHER) ist ein Maß für die durchschnittliche Molekülgröße hochpolymerer Stoffe. Die Bestimmung der Viskosität von Polymeren durch ein Kapillarviskosimeter erfolgt nach DIN EN ISO 1628-1:2012-010.

Zur Messung werden einprozentige (1 g/100 ml) toluolische Polymerlösungen bei 25 °C hergestellt und unter Verwendung des entsprechenden DIN-Ubbelohde-Viskosimeters nach ISO 3105:1994, Tabelle B.9 vermessen.

Das Aufkonzentrieren kann in entsprechend ausgerüsteten Kesseln oder Extrudern stattfinden, insbesondere beim damit einhergehenden Entgasen ist ein Entgasungs-Extruder bevorzugt.

Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.

Zusätzlich werden dabei weitere leichtflüchtige Bestandteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.

Die Lösung der Masse kann 5 bis 80 Gew.-%, insbesondere 30 bis 70 Gew.-% Lösungsmittel enthalten. Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben.

Die Klebemasse auf Acrylathotmelt-Basis kann UV-vernetzt werden. Andere Vernetzungsarten sind aber auch möglich, zum Beispiel die Elektronenstrahlenvernetzung.

In einer weiteren bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.

Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal^{®}, insbesondere acResin A 260UV, von der BASF geführt wird. Diese Klebemasse mit niedrigem K-Wert erhält ihre anwendungsgerechten Eigenschaften durch eine abschließende strahlenchemisch ausgelöste Vernetzung.

Weitere hervorragend geeignete Klebemassen werden in der EP 3 540 024 A1, der EP 2 520 627 A1, der EP 2 522 705 A1, der EP 2 520 628 A1, der EP 2 695 926 A1 und der EP 2 520 629 A1 beschrieben.

Ebenfalls bevorzugt besteht die Klebebeschichtung aus einer Klebemasse auf Basis Synthesekautschuk, nämlich insbesondere eine Klebemasse aus mindestens einem Vinylaromaten-Block-Copolymer und zumindest einem Klebharz. Typische Einsatzkonzentrationen für das Blockcopolymer liegen in einer Konzentration im Bereich zwischen 30 Gew.-% und 70 Gew.-%, insbesondere im Bereich zwischen 35 Gew.-% und 55 Gew.-%.

Als weitere Polymere können solche auf Basis reiner Kohlenwasserstoffe wie zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine vorhanden sein, welche die vinylaromatenhaltigen Blockcopolymere bis zur Hälfte ersetzen können.

Als Klebrigmacher dienen Klebharze, die mit dem Elastomerblock der Styrolblockcopolymere verträglich sind.

Plastifizierungsmittel wie zum Beispiel Flüssigharze, Weichmacheröle oder niedermolekulare flüssige Polymere wie zum Beispiel niedermolekulare Polyisobutylene mit Molmassen < 1500 g/mol (Zahlenmittel) oder flüssige EPDM-Typen werden typischerweise eingesetzt.

Als weitere Additive können allen genannten Typen von Klebemassen Lichtschutzmittel wie zum Beispiel UV-Absorber, sterisch gehinderte Amine, Antiozonantien, Metalldesaktivatoren, Verarbeitungshilfsmittel, endblockverstärkende Harze zugesetzt werden.

Füllstoffe wie zum Beispiel Siliziumdioxid, Glas (gemahlen oder in Form von Kugeln als Voll- oder Hohlkugeln), Mikroballons, Aluminiumoxide, Zinkoxide, Calciumcarbonate, Titandioxide, Ruße, Silikate und Kreide, um nur einige zu nennen, ebenso Farbpigmente und Farbstoffe sowie optische Aufheller können ebenfalls Verwendung finden.

Üblicherweise werden Haftklebemassen primäre und sekundäre Antioxidantien zugesetzt, um ihre Alterungsstabilität zu verbessern. Primäre Antioxidantien reagieren dabei mit Oxi- und Peroxiradikalen, die sich in Gegenwart von Sauerstoff bilden können, und reagieren mit diesen zu weniger reaktiven Verbindungen. Sekundäre Antioxidantien reduzieren zum Beispiel Hydroperoxide zu Alkoholen. Bekanntermaßen besteht ein synergistischer Effekt zwischen primären und sekundären Alterungsschutzmitteln, so dass der Schutzeffekt einer Mischung häufig größer ist als die Summe der beiden Einzeleffekte.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Die Herstellung und Verarbeitung der Haftklebemassen kann aus Lösung, Dispersion sowie aus der Schmelze erfolgen. Bevorzugte Herstell- und Verarbeitungsverfahren erfolgen aus der Schmelze. Für den letzteren Fall umfassen geeignete Herstellprozesse sowohl Batchverfahren als auch kontinuierliche Verfahren.

Der Klebemasseauftrag, bezogen auf die Klebebandfläche, liegt bevorzugt zwischen 40 und 160 g/m², vorzugsweise zwischen 60 und 130 g/m², weiter vorzugsweise zwischen 80 und 100 g/m² liegt (entspricht ungefähr einer Dicke von 40 bis 160 µm, vorzugsweise 60 bis 130 µm, weiter vorzugsweise 80 bis 100 µm).

Die Klebemasse kann in Längsrichtung des Klebebands in Form eines Streifens aufgebracht sein, der eine geringere Breite aufweist als der Träger des Klebebands.

Der beschichtete Streifen hat in einer vorteilhaften Ausführungsform eine Breite von 10 bis 80 % der Breite des Trägermaterials. Besonders vorzugsweise erfolgt der Einsatz von Streifen mit einer Beschichtung von 20 bis 50 % der Breite des Trägermaterials.

Je nach Verwendungsfall können auch mehrere parallele Streifen des Klebers auf dem Trägermaterial beschichtet sein.

Die Lage des Streifens auf dem Träger ist frei wählbar, wobei eine Anordnung direkt an einer der Kanten des Trägers bevorzugt wird.

Die Herstellung und Verarbeitung der Klebemassen kann aus Lösung, Dispersion sowie aus der Schmelze erfolgen. Bevorzugte Herstell- und Verarbeitungsverfahren erfolgen aus Lösung sowie aus der Schmelze. Besonders bevorzugt ist die Fertigung der Klebmasse aus der Schmelze, wobei insbesondere Batchverfahren oder kontinuierliche Verfahren eingesetzt werden können. Besonders vorteilhaft ist die kontinuierliche Fertigung der Haftklebemassen mit Hilfe eines Extruders.

Die so hergestellten Klebemassen können dann mit den allgemein bekannten Verfahren auf den Träger gebracht werden. Bei Verarbeitung aus der Schmelze können dies Auftragsverfahren über eine Düse oder einen Kalander sein.

Bei Verfahren aus der Lösung sind Beschichtungen mit Rakeln, Messern oder Düsen bekannt, um nur einige wenige zu nennen.

Möglich ist auch eine Transferierung der Klebemasse von einem anti-adhäsiven Trägertuch oder Releaseliner auf den Trägerverbund.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien.

Bevorzugt wird aber ein nicht-fusselndes Material eingesetzt wie eine Kunststofffolie oder ein gut verleimtes, langfaseriges Papier.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv wirkende Stoffe ausgerüstet sein. Gegebenenfalls befindet sich unter dem Rückseitenlack oder alternativ dazu einen Schaumbeschichtung auf der Rückseite des Klebebands.

Der allgemeine Ausdruck "Klebeband" umfasst im Sinne dieser Erfindung alle flächigen Gebilde, deren Ausdehnung in zwei Raumrichtungen (x-Richtung und y-Richtung; Länge und Breite) wesentlich größer ist als in der dritten Raumrichtung (z-Richtung; Dicke) wie Bändern mit ausgedehnter Länge und begrenzter Breite, Bandabschnitt und dergleichen.

Das Klebeband liegt insbesondere in Bahnform vor. Unter einer Bahn wird ein Objekt verstanden, dessen Länge um ein Vielfaches größer ist als die Breite.

Das Klebeband weist somit eine Längsausdehnung und eine Breitenausdehnung auf. Das Klebeband weist auch eine senkrecht zu beiden Ausdehnungen verlaufende Dicke auf, wobei die Breitenausdehnung und Längsausdehnung um ein Vielfaches größer sind als die Dicke. Die Dicke des Trägers ist über die gesamte durch Länge und Breite bestimmte Flächenausdehnung des Klebebands möglichst gleich, vorzugsweise exakt gleich. Lediglich im Bereich der Verstärkungselemente weist das Klebeband eine größere Dicke auf.

Erfindungsgemäß ist die einseitig klebend ausgerüstete Variante des Klebebands bevorzugt.

Bevorzugt wird das Klebeband so gewickelt, dass kein Überlapp mit der darunter befindlichen Wickellage vorhanden ist, so dass sich die Kanten des Klebebandes berühren, woraus im Idealfall ein geschlossener Schlauch entsteht. Weiter vorzugsweise wird das Klebeband so gewickelt, dass zwischen den einzelnen Wicklungen ein Abstand vorgesehen ist, bevorzugt mit einem Abstand, der mindestens 0,5 mal, besonders bevorzugt mindestens 1 mal und maximal 10 mal, ganz besonders bevorzugt maximal 5 mal der Breite des (gegebenenfalls gedehnten) auf dem Gut verklebten Klebebandes entspricht.

Besonders vorteilhaft kann das Klebeband zum automatisierten Wickeln von Kabelbäumen eingesetzt werden.

Die zu wickelnden Kabelbäume werden entsprechend der Produktionsanforderungen ausgewählt. Die Kabelbäume werden manuell oder durch ein Zuführsystem in die Wickelmaschine eingelegt und fixiert. Das Klebeband wird in die Maschine eingespannt und auf die richtige Spannung eingestellt.

Die Maschine wird programmiert, um die spezifischen Anforderungen für den Wickelprozess zu erfüllen, wie zum Beispiel die Wickeldichte, die Anzahl der Wicklungen und die Positionierung des Bands. Diese Einstellungen können für verschiedene Kabelbaumtypen gespeichert und bei Bedarf abgerufen werden.

Die Maschine beginnt den Wickelprozess, indem sie das Klebeband um den Kabelbaum führt. Der Kabelbaum oder die Wickelvorrichtung dreht sich, damit das Klebeband gleichmäßig und straff aufgebracht wird. Der Kabelbaum wird kontinuierlich durch die Maschine geführt, während das Klebeband in einer gleichmäßigen Spirale aufgebracht wird.

Sensoren überwachen den Wickelprozess, um sicherzustellen, dass das Klebeband korrekt positioniert und gespannt ist. Die Maschine kann automatisch Anpassungen vornehmen, um Abweichungen zu korrigieren und eine gleichmäßige Wicklung zu gewährleisten.

Nach Abschluss des Wickelns wird das Klebeband automatisch geschnitten. Der fertig gewickelte Kabelbaum wird aus der Maschine entnommen, manuell oder durch ein automatisiertes Entnahmesystem.

Zusammengefasst bietet das automatisierte Wickeln von Kabelbäumen eine hohe Präzision und Effizienz, reduziert den Arbeitsaufwand und minimiert Fehler im Vergleich zu manuellen Methoden.

Schließlich umfasst der Erfindungsgedanke auch ein langgestrecktes Gut, ummantelt mit einem erfindungsgemäßen Klebeband. Vorzugsweise handelt es sich bei dem langgestreckten Gut um einen Kabelsatz.

Gemäß dem Stand der Technik werden Nähwirkstoffe wie Vlies-Nähwirkstoffe derartig beschichtet, dass die Anfangsschlaufe einer Schlaufenkette, die aus ihrer benachbarten Verbindungsschlaufe herausgezogen werden kann, stets am hinteren zweiten Ende des Klebebandes angeordnet ist. Jede Verbindungsschlaufe verläuft also durch eine in Richtung auf das erste Ende benachbarte Verbindungsschlaufe. Damit ist sichergestellt, dass eine beispielsweise beim Abwickeln des Klebebandes aufgebrachte Zugkraft oder Zugspannung nicht dazu führen kann, dass die Schlaufenkette beschädigt wird.

Die Maschinenrichtung MDᵥ des Vlieses verläuft so, dass in Maschinenrichtung MDᵥ des Vlieses betrachtet die Schlaufenöffnung jeweils hinter der Schlaufe liegen, während die Maschinenrichtung MD_{kb} des Klebebandes so verläuft, dass in Maschinenrichtung MD_{kb} des Klebebandes betrachtet die Schlaufen hinter der Schlaufenöffnung liegen.

Dies ist bei der vorliegenden Erfindung anders. Erfindungsgemäß verläuft jede Verbindungsschlaufe durch wenigstens eine, bevorzugt genau eine, in Richtung auf das zweite Ende benachbarte Verbindungsschlaufe. Damit ist sichergestellt, dass die Anfangsschlaufe, also die Schlaufe der Schlaufenkette, die am nächsten am ersten Ende des Klebebandes angeordnet ist, aus der benachbarten Verbindungsschlaufe entfernbar ist. Die Maschinenrichtung MDᵥ des Vlieses verläuft weiterhin so, dass in Maschinenrichtung MDᵥ des Vlieses betrachtet die Schlaufenöffnung jeweils hinter der Schlaufe liegen, während die Maschinenrichtung MD_{KB} des Klebebandes um 180° gedreht ist und so verläuft, dass in Maschinenrichtung MD_{kb} des Klebebandes betrachtet die Schlaufen vor der Schlaufenöffnung liegen.

Dies hat vorzugsweise zufolge, dass die Anfangsschlaufe der benachbarten Verbindungsschlaufe entfernt werden kann, in dem auf den Abschnitt des Klebebandes, in dem sich die Anfangsschlaufe befindet, eine Zugspannung in Längsrichtung des Klebebandes aufgebracht wird. Dies kann beispielsweise geschehen, indem auf das erste Ende des Klebebandes eine Zugkraft ausgeübt wird und der verbleibende Teil der Klebebandrolle festgehalten wird, so dass das Klebeband nicht weiter abgewickelt werden kann.

Der Teil des wenigstens einen Wirkfadens oder des wenigstens einen Nähfadens, der auf der Unterseite des Trägers mit der Haftklebemasse in Kontakt kommt, erstreckt sich vorzugsweise in gerader Linie an der Unterseite des Trägers, wobei sich diese gerade Linie vorzugsweise in Längsrichtung des Klebebandes erstreckt. Auf der gegenüberliegenden Oberseite des Trägers bildet der wenigstens eine Wirkfaden oder der wenigstens eine Nähfaden die Verbindungsschlaufen. Sobald eine der Verbindungsschlaufen aus ihrer benachbarten Verbindungsschlaufe entfernt oder herausgezogen wurde, kann das Klebeband in diesem Bereich verlängert werden, wenn eine ausreichende Zugspannung in Längsrichtung des Klebebandes wirkt. Der jeweilige Wirkfaden oder Nähfaden tritt aus dem textilen Träger an einer Austrittsstelle aus und an einer anderen Stelle, die als Eintrittsstelle bezeichnet wird, wieder in den textilen Träger ein. Die Länge des Wirkfadens zwischen der Austrittsstelle und der Eintrittsstelle ist größer als der Abstand zwischen den beiden Stellen, weswegen der Wirkfaden oder der Nähfaden die Verbindungsschlaufe bildet. Wird nun eine ausreichend große Zugspannung in Längsrichtung auf diesen Bereich des Klebebandes aufgebracht, wird das Klebeband, insbesondere der textile Träger mit der an dessen Unterseite aufgebrachten Haftklebemasse gedehnt. Dabei wird der Abstand zwischen der Austrittsstelle und der Eintrittsstelle so lange vergrößert, bis er der Länge des Wirkfadens oder der Länge des Nähfadens zwischen diesen beiden Stellen entspricht. Erst dann sind eine weitere Dehnung und Verlängerung des Klebebandstreifens in diesem Bereich nicht mehr möglich.

Sobald die Anfangsschlaufe aus ihrer benachbarten Verbindungsschlaufe entfernt wurde, wird diese benachbarte Verbindungsschlaufe zur neuen Anfangsschlaufe und kann ihrerseits aus ihrer in Richtung auf das zweite Ende benachbarten Verbindungsschlaufe entfernt werden. Wird also beim Abwickeln des Klebebandes von der Klebebandrolle eine ausreichende Zugspannung in Längsrichtung aufrechterhalten, kann jeweils der freie Bereich, der bereits von der Klebebandrolle abgewickelt ist, auf diese Weise irreversibel gedehnt werden. Dabei vergrößert sich nicht nur die Länge des freien Bereiches, sondern es reduziert sich auch seine Breite, das Klebeband verschmälert sich. Die Breite des verschmälerten Klebebandes im Vergleich zur ursprünglichen Breite kann sich auf bis zu 90 %, vorzugsweise auf bis zu 75 %, weiter vorzugsweise auf bis zu 50 % (also Hälfte der ursprünglichen Breite) verringern.

In diesem Zustand wird das Klebeband dann seiner eigentlichen Verwendung, beispielsweise der Umwicklung eines Gegenstandes, zugeführt.

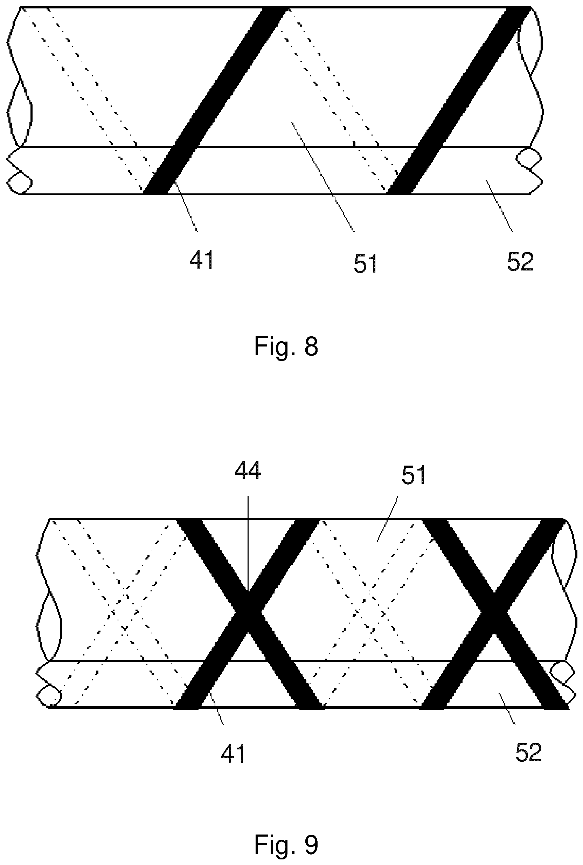

In den Figuren 8 und 9 sind zwei Varianten zur schraubenlinienförmigen Umwicklung eines (der Einfachheit halber aus zwei Kabeln (51, 52) bestehenden) Kabelbaums mit dem erfindungsgemäßen verschmälerten Klebeband (41) dargestellt.

In der Figur 8 ist das erfindungsgemäße Klebeband (41) in einer einfachen Umwicklung um die Kabel (51, 52) geführt.

Bei der doppelten, gegenläufigen Umwicklung in der Figur 9 hingegen ergeben sich Kreuzungspunkte (44) mit dem Klebeband (41), in denen zwei Schichten Klebeband (41) übereinander kleben und die somit eine besonders sichere Verbindung der Kabel (51, 52) garantieren.

Durch die Erfindung ist es somit möglich, die Länge des aufgewickelten Klebebandes vor der eigentlichen Verwendung zu vergrößern und gleichzeitig seine Breite zu reduzieren. Hieraus ergibt sich eine deutlich größere Länge im gedehnten Zustand als die eigentliche Lauflänge der Klebebandrolle im ungedehnten Zustand vorgibt, ohne dass dadurch der Durchmesser der Klebebandrolle beeinflusst wird.

Die durch die Zugspannung hervorgerufene Verlängerung ist insbesondere nicht vollständig elastisch, so dass das Klebeband sich nach dem Wegfall der Spannung, also wenn das Klebeband von dem Gut entfernt würde, nicht wieder auf die ursprüngliche Länge zusammenzieht. Die Verlängerung kann einen elastischen Anteil aufweisen, ist jedoch vorzugsweise nicht vollständig elastisch. Sie kann also nicht durch den Wegfall der Spannung vollständig rückgängig gemacht werden.

Vorzugsweise bildet das aufgewickelte Klebeband eine Klebebandrolle oder eine Klebebandspule. Vorzugsweise bildet die Mehrzahl von zueinander benachbarten Verbindungsschlaufen wenigstens eine, vorzugsweise mehrere, beispielsweise zwei, drei oder vier, in Längsrichtung des Klebebandes verlaufende Schlaufenketten.

Beide möglichen Erscheinungsformen von aufgewickeltem Klebeband, also Klebebandrollen und Klebebandspulen sind mögliche Ausführungsformen der vorliegenden Erfindung. Die Klebebänder gemäß der vorliegenden Erfindung werden vorzugsweise in den Breiten 9 bis 50 mm, insbesondere 19 bis 25 mm verwendet. Als Breite der Rollen werden üblicherweise 9, 10, 12, 15, 19, 25 und 30 mm gewählt.

Soll in diesem Sinne eine Zugspannung auf den Bereich der Anfangsschlaufe des Klebebandes aufgebracht werden, muss die Zugkraft in Richtung auf das erste Ende zwischen diesem Bereich und dem ersten Ende angreifen. Daher ist es sinnvoll, wenn dieser Abschnitt des Klebebandes, der sich zwischen dem Bereich der Anfangsschlaufe und dem ersten Ende erstreckt, so groß ist, dass die Zugkraft angelegt werden kann. Die Anfangsschlaufe ist daher vorzugsweise in einem Abstand von beispielsweise mindestens 5 mm, vorzugsweise mindestens 10 mm, besonders bevorzugt mindestens 15 mm vom ersten Ende des Klebebandes angeordnet. Zwischen der Anfangsschlaufe und dem ersten Ende befinden sich dann vorzugsweise wenigstens eine, vorzugsweise mehrere freie Schlaufen, um auch hier eine Dehnbarkeit des Klebebandes zu gewährleisten. Zudem wird auf diese Weise erreicht, dass sich der wenigstens eine Wirkfaden und/oder der wenigstens einen Nähfaden bis zum ersten Ende des Klebebandes erstreckt, wodurch die Herstellung vereinfacht wird.

In einer bevorzugten Ausgestaltung bilden die Verbindungsschlaufen wenigstens eine Schlaufenkette, die sich entlang der Längsrichtung des Klebebandes erstreckt besonders bevorzugt beginnt diese Schlaufenkette am zweiten Ende des Klebebandes.

Vorzugsweise ist das Klebeband derart aufgewickelt, dass die Haftklebemasse radial innen angeordnet ist. Alternativ dazu ist das Klebeband so aufgewickelt, dass sich die Haftklebemasse radial außen befindet. Vorzugsweise ist das Klebeband auf eine Grundrolle aufgewickelt, wobei die Grundrolle vorzugsweise aus einem Kunststoff oder aus Pappe hergestellt ist. Insbesondere für den Fall, dass keine solche Grundrolle vorhanden ist, ist es von Vorteil, das Klebeband so aufzudecken, dass sich die Haftklebemasse radial außen befindet.

Mithilfe der beigefügten Figuren wird nachfolgend ein Ausführungsbeispiel der vorliegenden Erfindung näher erläutert. Es zeigen
- Figur 1: die schematische Darstellung einer Klebebandrolle,
- Figuren 2 bis 5: schematische Darstellungen unterschiedlicher Zustände beim Dehnen.

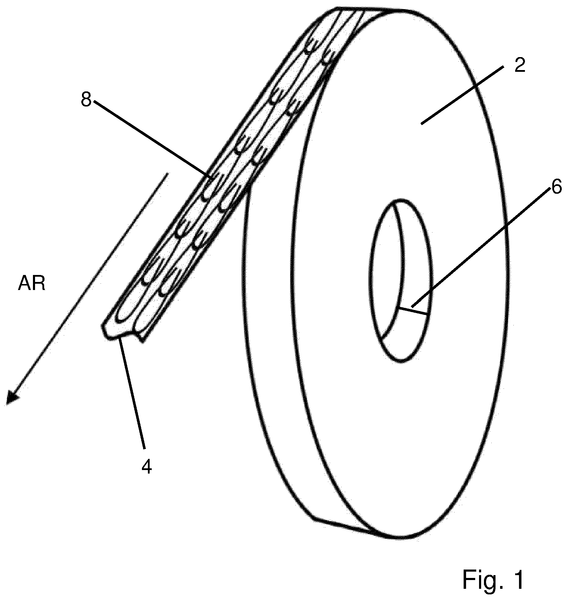

Figur 1 zeigt ein zu einer Klebebandrolle aufgewickeltes Klebeband 2, das ein erstes Ende 4 und ein zweites Ende 6 aufweist. Das erste Ende 4 ist vorne und das zweite Ende 6 hinten angeordnet. In der Darstellung gemäß Figur 1 ist das erste Ende 4 bereits vom Rest der Klebebandrolle abgewickelt worden. Das Klebeband verfügt über wenigstens einen Wirkfaden, der eine Mehrzahl von Verbindungsschlaufen 8 bildet. Jede der Verbindungsschlaufen 8, die in Figur 1 schematisch dargestellt sind, erstreckt sich durch die in Richtung auf das zweite Ende 6 benachbarte Verbindungsschlaufe 8.

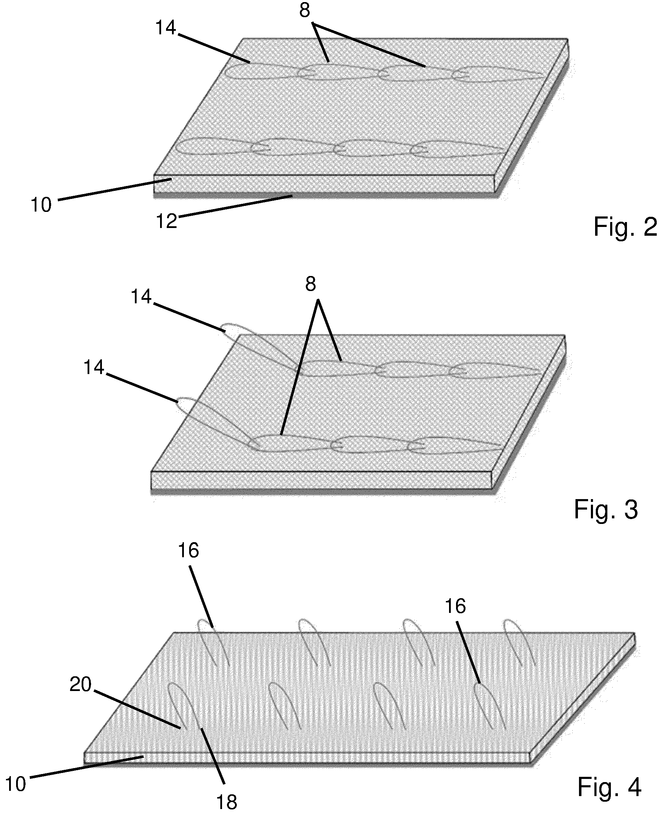

Die Figuren 2 bis 5 zeigen unterschiedliche Stadien beziehungsweise. Zustände während des Dehnens des Klebebandes. Man erkennt in Figur 2, dass das Klebeband 2 einen textilen Träger 10 aufweist. An dessen Unterseite ist eine Haftklebemasse 12 angeordnet. Der wenigstens eine Wirkfaden bildet die Verbindungsschlaufen 8, die in der Darstellung der Figur 2 zwei zueinander parallele Schlaufenketten bilden. In den beiden Schlaufenketten erstreckt sich jede der Verbindungsschlaufen 8 durch ihre jeweils benachbarte Verbindungsschlaufe 8. Die Ausnahme bildet jeweils die am rechten Rand des Trägers 10 dargestellte Verbindungsschlaufe 8, die keine weiter rechts angeordnete benachbarte Verbindungsschlaufe 8 aufweist. Jeweils am linken Rand des Trägers 10 dargestellte Verbindungsschlaufe 8 bildet die Anfangsschlaufe 14, die sich dadurch auszeichnet, dass sich keine Verbindungsschlaufe 8 durch die Anfangsschlaufe 14 hindurch erstreckt. Im gezeigten Ausführungsbeispiel befindet sich das erste Ende 4 in Figur 2 links und das zweite Ende 6 in Figur 2 rechts.

Wird nun eine Zugspannung in Längsrichtung, in den Figuren 2 bis 5, also wenn an der linken Seite gezogen wird, auf das Klebeband ausgeübt, richten sich zunächst die Anfangsschlaufen 14 der Schlaufenketten auf. Dies ist in Figur 3 dargestellt. Sobald die Anfangsschlaufen 14 sich noch weiter als in Figur 3 dargestellt aufgerichtet haben, können sich auch die folgenden Verbindungsschlaufen 8 aufrichten und lösen sich so von den Anfangsschlaufen 14. Die Anfangsschlaufe 14 wird auf diese Weise aus der folgenden Verbindungsschlaufe 8 herausgezogen. Es ergibt sich schematisch dargestellt die Situation aus Figur 4. Die einzelnen Schlaufen, die nun freie Schlaufen 16 sind, sind nicht mehr miteinander verbunden und erstrecken sich auch nicht durch andere Schlaufen hindurch. Jede der gezeigten freien Schlaufen 16 wird gebildet durch einen Teil des jeweiligen Wirkfadens, der an einer Austrittsstelle 18 aus der Oberseite des textilen Trägers 10 austritt und an einer Eintrittsstelle 20 wieder in die Oberseite des textilen Trägers 10 eintritt. Die Länge des Wirkfadens zwischen der Austrittsstelle 18 unter Eintrittsstelle 20 ist deutlich größer als der Abstand der Austrittsstelle 18 von der Eintrittsstelle 20. Daher bildet sich die Schlaufen 16.

Wird nun die Zugspannung auf das Klebeband entlang der Längsrichtung des Klebebandes aufrechterhalten, wird das Klebeband und insbesondere dessen textilen Träger 10 sowie die Haftklebemasse 12 gedehnt. Dabei vergrößert sich der Abstand zwischen der Austrittsstelle 18 unter Eintrittsstelle 20 jeder freien Schlaufen 16. Dadurch wird die Länge des Klebebandes vergrößert und gleichzeitig die Breite reduziert. Die dabei erreichte Dehnung ist begrenzt durch die Länge des Wirkfadens zwischen der Austrittsstelle 18 unter Eintrittsstelle 20, also der Länge der freien Schlaufen 16.

### Bezugszeichenliste

- 2: Klebeband
- 4: erstes Ende
- 6: zweites Ende
- 8: Verbindungsschlaufe
- 10: textiler Träger
- 12: Haftklebemasse
- 14: Anfangsschlaufe
- 16: freie Schlaufe
- 18: Austrittsstelle
- 20: Eintrittsstelle
- 31: Vlies-Nähwirkstoff
- 32: Grundvlies
- 33: Nähfäden
- 34: Schlaufenkette
- 35: Kette von Maschenstegen
- 36: Schlaufe
- 37: Schlaufenöffnung
- 38: Schlinge
- 41: Klebeband
- 42: Klebemassenschicht
- 44: Kreuzungspunkt
- 51, 52: Kabel

## Patentansprüche

1. Verfahren zum Ummanteln von langgestrecktem Gut, wie insbesondere Kabelsätzen, wobei bei dem Verfahren
ein Klebeband bereitgestellt wird, umfassend einen textilen Träger und eine auf mindestens einer Seite des Trägers aufgebrachte Haftklebemasse,
und das langgestreckte Gut mit dem Klebeband ummantelt wird,
**dadurch gekennzeichnet, dass**
auf das Klebeband, bevor es auf das langgestreckte Gut aufgebracht wird, eine Zugspannung in Längsrichtung aufgebracht wird, durch die das Klebeband verlängert wird, so dass es im verlängerten Zustand in einer Schraubenlinie um das langgestreckte Gut geführt wird und auf diesem im verlängerten Zustand fixiert wird.

2. Verfahren nach Anspruch 1, **dadurch gekennzeichnet, dass** das Klebeband von einer Klebebandrolle oder einer Klebebandspule abgewickelt wird und beim Abwickelvorgang die Zugspannung auf das Klebeband ausgeübt wird.

3. Verfahren nach Anspruch 2, **dadurch gekennzeichnet, dass** die Klebebandrolle oder Klebebandspule auf einem Träger angeordnet ist und sich der Träger relativ zu dem langgestreckten gut bewegt, wobei das Klebeband durch diese Bewegung von der Klebebandrolle oder der Klebebandspule abgewickelt wird.

4. Verfahren nach Anspruch 3, **dadurch gekennzeichnet, dass** der Träger und/oder das langgestreckt Gut maschinell und von einer elektrischen Steuerung gesteuert bewegt werden.

5. Verfahren nach einem der vorstehenden Ansprüche, **dadurch gekennzeichnet, dass** das Klebeband in dem freien Abschnitt um wenigstens 20%, bevorzugt um wenigstens 100%, besonders bevorzugt um wenigstens 200 % verlängert wird.

6. Verfahren nach einem der vorstehenden Ansprüche, **dadurch gekennzeichnet, dass** eine Breite des freien Abschnitts des Klebebandes, die sich senkrecht zur Längsrichtung erstreckt, beim Verlängern des freien Abschnitts des Klebebandes um wenigstens 25%, bevorzugt um wenigstens 50%, besonders bevorzugt um wenigstens 70% reduziert wird.

7. Verfahren nach einem der vorstehenden Ansprüche, **dadurch gekennzeichnet, dass** die Verlängerung des Klebebands irreversibel ist.

8. Verfahren nach einem der vorstehenden Ansprüche, **dadurch gekennzeichnet, dass** der textile Träger über mindestens eine in Längsrichtung verlaufende Schlaufenkette verfügt, die während der Verlängerung des Klebebandes mindestens teilweise im verlängerten Bereich aufgelöst wird.

9. Verfahren nach Anspruch 8, **dadurch gekennzeichnet, dass** die mindestens eine Schlaufenkette durch mindestens einen Wirkfaden gebildet wird.

10. Verfahren nach einem der vorstehenden Ansprüche, **dadurch gekennzeichnet, dass** das langgestreckt Gut ein Kabelbaum ist.

11. Verfahren nach einem der vorstehenden Ansprüche, **dadurch gekennzeichnet, dass** das Klebeband in einem automatisierten Wickelprozess in einer Schraubenlinie um das langgestreckte Gut geführt wird.

12. Langgestrecktes Gut, wie insbesondere ein Kabelsatz, erhalten durch ein Verfahren nach einem der vorstehenden Ansprüche.

13. Fahrzeug, enthaltend ummanteltes langgestrecktes Gut nach Anspruch 12.
